Europäisches Patentamt

European Patent Office

Office européen des brevets

(19)

(11) Veröffentlichungsnummer: **0 047 884**
**B1**

(12) **EUROPÄISCHE PATENTSCHRIFT**

(45) Veröffentlichungstag der Patentschrift:
31.10.84

(51) Int. Cl.³: **F 16 K 31/60**

(21) Anmeldenummer: 81106543.2

(22) Anmeldetag: **22.08.81**

(54) **Abdeckkopf für die Handhabe einer Warmwasserarmatur.**

(30) Priorität: **11.09.80 LU 82762**

(43) Veröffentlichungstag der Anmeldung:
**24.03.82 Patentblatt 82/12**

(45) Bekanntmachung des Hinweises auf die Patenterteilung:
**31.10.84 Patentblatt 84/44**

(84) Benannte Vertragsstaaten:
**CH DE IT LI**

(56) Entgegenhaltungen:
**DE - A - 2 040 903**
**DE - A - 2 116 427**
**DE - A - 2 644 633**

(73) Patentinhaber: **Odenwälder Kunststoffwerke GmbH,**
**Industriegelände, D-6967 Buchen/Odenwald (DE)**

(72) Erfinder: **Heinz, Jürgen, Am Steinmäuerle 12,**
**D-6967 Buchen/Hettingen (DE)**

(74) Vertreter: **Hach, Hans Karl, Dr., Tarunstrasse 23,**
**D-6950 Mosbach-Waldstadt (DE)**

## Beschreibung

Die Erfindung betrifft einen Abdeckkopf für die Handhabe einer Warmwasserarmatur mit einem auf die Armatur steckbaren, aus Kunststoff bestehenden Innenteil, dessen Umfang mit einer Effektfolie abgedeckt ist, welches Innenteil über ein, die Effektfolie vollständig überdeckendes aus klarem, durchsichtigem Kunststoff bestehendes, einen Luftspalt mit dem Innenteil aussparendes Außenteil gestülpt ist, das entlang des unteren Randes der Effektfolie mit dem Innenteil eine wasserdichte Abdichtung des Luftspaltes bildet.

Bei einem aus der DE-A-2 116 427 vorbekannten Abdeckkopf dieser Art steckt die Effektfolie in dem Luftspalt und kann sich aufgrund ihrer Flexibilität an der Innenwand des Außenteils oder an der Außenwand des Innenteils anlegen. Bei Verwendung spiegelnder Metalleffektfolien ergibt sich ein unterschiedlicher Eindruck bei Anlage der Folie an der Außenwand oder an der Innenwand, denn im einen Fall sieht der Betrachter die Folie hinter einem Luftspalt und im anderen Fall ist kein Luftspalt auf der dem Betrachter zugekehrten Außenseite der Folie wirksam. Es ist denkbar, daß in beiden Situationen dem Betrachter sich dem Auge wohlgefälliges Bild bietet. Wenn jedoch die Folie, wie beim Stande der Technik möglich, auf einigen Strecken an der Außenwand des Innenteils und auf anderen Strecken auf der Innenwand des Außenteils anliegt, dann ergibt sich über den Umfang der Folie fleckenhaft ein unterschiedliches Reflexionsbild für den Betrachter, das unschön aussieht und sogar Undichtigkeiten durch eingedrungenes Wasser vortäuscht.

Aufgabe der Erfindung ist es, einen Abdeckkopf der eingangs genannten Art so auszugestalten, daß ein Metalleffekt ohne die obengenannten Nachteile erzielbar ist.

Die Erfindung ist dadurch gekennzeichnet, daß die Effektfolie ein außen mit einer hochglänzenden Metallschicht versehener Kunststoff-Folienüberzug ist, daß der Kunststoff-Folienüberzug über den Umfang des Innenteils an diesem überall dicht anliegend aufgezogen ist, so daß der Luftspalt sich ausschließlich zwischen dem Kunststoff-Folienüberzug und dem Außenteil erstreckt, und daß der Luftspalt entlang des oberen und des unteren Randes des Kunststoff-Folienüberzuges wasserdicht abgedichtet ist durch Verschweißen oder Verkleben von Innenteil und Außenteil mit dem Kunststoff-Folienüberzug entlang der betreffenden Ränder dieser Teile.

Da die Folie überall dicht anliegend auf das Innenteil aufgezogen ist, bietet sie auf dem ganzen Umfang das gleiche Reflexionsbild und vorgetäuschte Flecken werden vermieden.

Einen gewünschten Metalleffekt bei modernen Armaturen kann man, wie bekannt, auch durch hochglänzende Metallbeschichtung des Innenteils, durch Aufdampfen von reinstem Aluminium oder anderem Edelmetall im Hochvakuum direkt auf das Innenteil erzielen. Das führt auch wegen der eindeutigen Anlage der reflektierenden Beschichtung am Innenteil zu einem gleichförmigen Reflexionsbild, ist aber ein langwieriger und sehr aufwendiger Arbeitsgang, der deshalb mit einer hohen Ausschußquote behaftet ist, weil kleinste Fehler in der Metallbeschichtung bereits das ganze Innenteil unbrauchbar machen. Nacharbeiten sind da nicht mehr möglich; ein mit solchen Aufdampffehlern behaftetes Innenteil kann nur verschrottet werden. Die dadurch bedingte Ausschußquote wird nach der Erfindung reduziert.

Nach der Erfindung wird zunächst einmal der metallbeschichtete Kunststoffolienüberzug hergestellt, als Einzelstück in Form eines Schlauchabschnittes, abgeschnitten von einem längeren Schlauch, oder als Einzelstück in Form einer Haube oder eines Ringes. Wenn bei der Erzeugung der hochglänzenden Metallschicht auf dem Kunststoffolienüberzug Produktionsfehler unterlaufen, dann ist nur der fragliche Kunststoffolienüberzug betroffen und nicht das ganze Innenteil. Das Auftragen einer hochglänzenden Metallschicht auf die Kunststoffolie des Kunststofffolienüberzuges ist ungleich einfacher als auf das Innenteil, so daß aus diesem Grund auch von vornherein schon Fehler vermieden werden. Auch das Aufziehen des fertigen Kunststofffolienüberzuges auf das Innenteil ist ein im Vergleich zum Aufdampfen verhältnismäßig einfacher Arbeitsgang, den man leicht mit sehr geringer Ausschußquote betreiben kann.

Weitere Merkmale der Erfindung sind Gegenstand der Unteransprüche.

Die Erfindung wird nun anhand der Zeichnung näher erläutert. In der Zeichnung zeigt

Fig. 1 ein erstes Ausführungsbeispiel eines Abdeckkopfs nach der Erfindung im Längsschnitt,

Fig. 2 den Querschnitt II aus Fig. 1,

Fig. 3 ein zweites Ausführungsbeispiel eines Abdeckkopfs nach der Erfindung im Längsschnitt,

Fig. 4 den Querschnitt VIII aus Fig. 3, und

Fig. 5 eine als dünnwandiges Formteil gespritzte Kunststoff-Folienhaube.

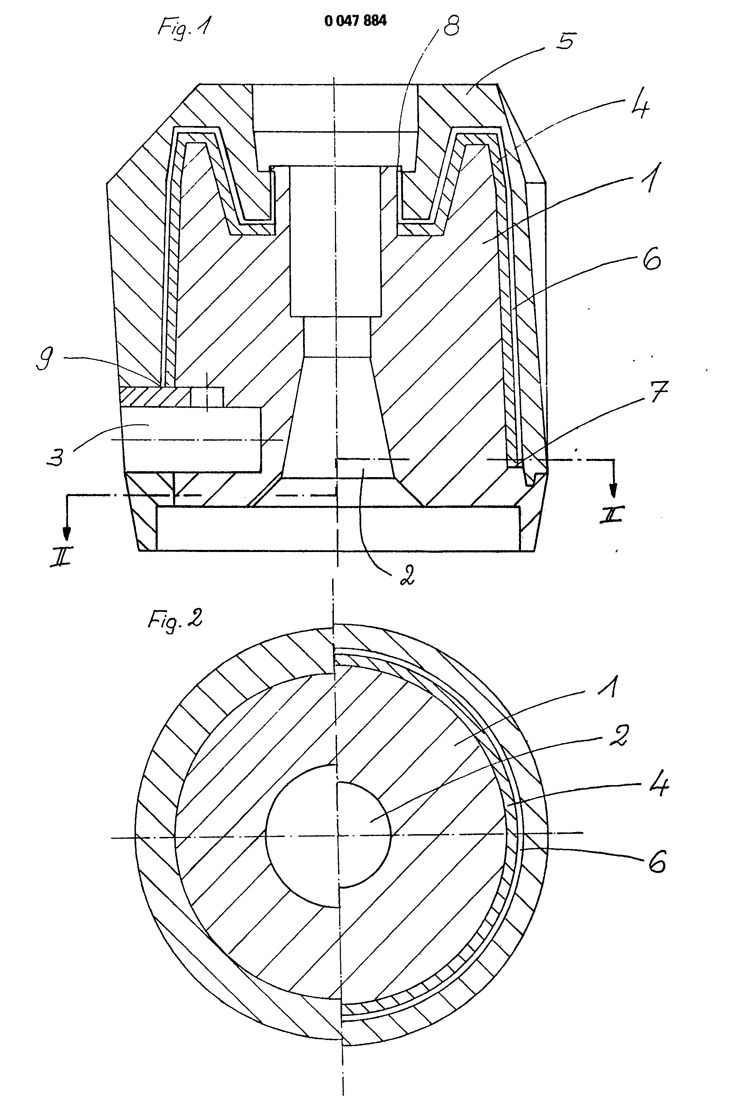

Gemäß Fig. 1 ist mit 1 das aus Kunststoff bestehende Innenteil bezeichnet, daß mit einer ausgesparten Aufnahme 2 auf das Betätigungselement einer Wasserarmatur steckbar ist. Seitlich ist ein Durchbruch 3 vorgesehen zum Einstecken einer Bedienungshandhabe. Das Innenteil 1 ist außen profiliert und mit einem Kunststoff-Folienüberzug 4 überzogen, der mit seiner ganzen Innenfläche dicht auf der Außenfläche des Innenteils aufliegt. Der Kunststoff-Folienüberzug ist außen mit einer polierten Metallschicht belegt. Über das Innenteil 1 ist ein Außenteil 5 aus glasklarem, durchsichtigen Kunststoff gestülpt, das den gesamten Kunststoff-Folienüberzug 4 überdeckt. Zwischen Kunststoff-Folienüberzug 4 und Außenteil 5 ist ein Luftspalt 6 ausgespart, der vollständig nach außen wasserdicht abgedichtet ist durch Verbindung von Innenteil und Außenteil entlang der betreffenden Ränder.

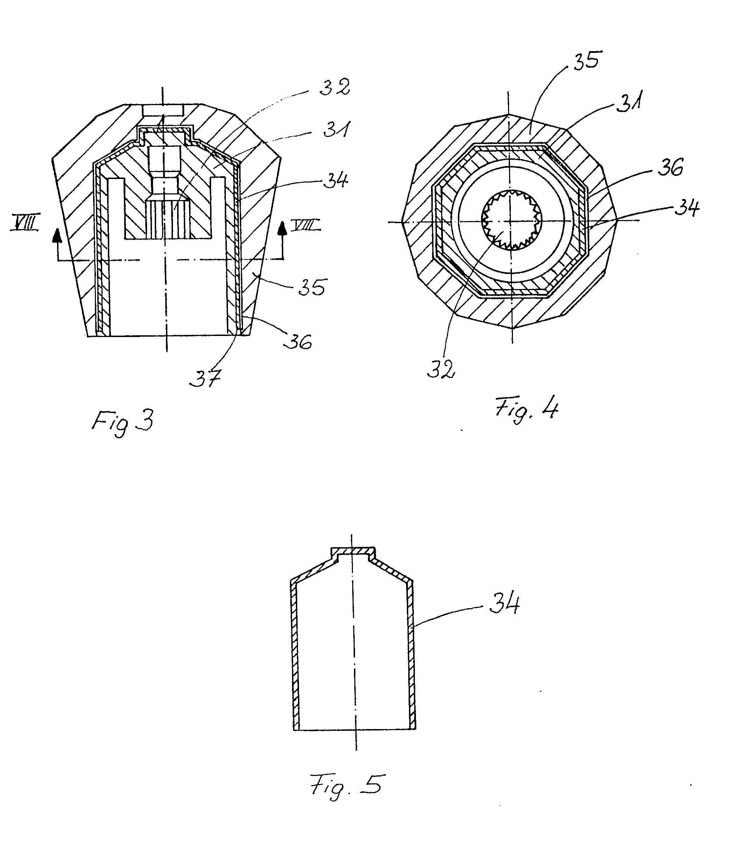

Bei den nachfolgenden Fig. 3 und 4 sind Teile, die denen aus Fig. 1 und 2 entsprechen, mit der gleichen Bezugsziffer, jedoch vermehrt um 30, bezeichnet. Diese Ausführungsbeispiele unterscheiden sich nur durch die aus der Zeichnung ersichtlichen geometrischen Unterschiede durch die nachfolgend erläuterten Besonderheiten.

Bei den Ausführungsbeispielen nach Fig. 3 und 4 ist kein dem Durchbruch 3 entsprechender Durchbruch vorgesehen. Dadurch entfällt auch die der Abdichtung 9 entsprechende Abdichtung.

Die Abdichtungen 7, 8, 9 beziehungsweise die entsprechenden Abdichtungen der übrigen Ausführungsbeispiele können herbeigeführt werden durch Verschweißen oder Verkleben von Innenteil und Außenteil entlang der betreffenden Ränder, wobei in diese Verschweißung beziehungsweise Verklebung auch der betreffende Rand des Kunststoff-Folienüberzuges mit einbezogen werden kann.

Der bei diesen Ausführungsbeispielen eingesetzte Kunststoff-Folienüberzug ist ein vorgefertigtes Teil und als solches bereits mit seiner äußeren, polierten Metallschicht überzogen. Diese Metallschicht kann aufkaschiert, aufgedampft oder elektrolytisch aufgebracht sein.

Der Kunststoff-Folienüberzug ist nach dem Beispiel gemäß Fig. 1 und 2 oben und unten offen und kann aus einem Kunststoff-Folienschlauchabschnitt bestehen. Diese Schlauchabschnitte können von einem vorgefertigten, außen metallbeschichteten Kunststoffschlauch abgeschnitten werden. Der Kunststoff-Folienüberzug kann auch als Tiefziehteil in Form einer Kunststoff-Folienhaube mit Stempel gezogen oder geblasen aus einer Kunststoffplatte hergestellt werden. Dabei kann man von einer Kunststoffplatte ausgehen, die bereits die Metallbeschichtung aufweist. Man kann aber auch die Metallbeschichtung nachträglich auf die gezogene Kunststoff-Folienhaube aufbringen. Gezogene Kunststoff-Folienhauben können oben geschlossen ausgebildet sein, so wie sie für das Ausführungsbeispiel nach Fig. 3 und 4 benötigt werden; sie können aber auch oben offen sein, wie für das Ausführungsbeispiel nach Fig. 1 und 2 benötigt.

Schließlich kann man eine Kunststoff-Folienhaube, wie in Fig. 5 dargestellt, auch als dünnwandiges Kunststoff-Spritzteil herstellen, und zwar weitgehend in der später benötigten geometrischen Form. Das Kunststoff-Spritzteil aus Fig. 5 ist in einer Formgebung hergestellt, so daß es als Kunststoff-Folienüberzug 34 nach Fig. 3 und 4 einsetzbar ist. Der äußere Metallüberzug wird bei dem Kunststoff-Spritzteil entweder beim Spritzen mit eingeprägt oder danach auf das bereits gespritzte Kunststoff-Spritzteil aufgetragen.

Wesentlich ist, daß bei allen Kunststoffolienüberzügen der äußere Metallüberzug bereits aufgetragen ist, ehe der betreffende Kunststofffolienüberzug über das zugehörige Innenteil gestülpt wird.

Den angestrebten strammen, dichten, angeschmiegten Sitz des auf das Innenteil überzogenen Kunststofffolienüberzuges erzielt man, indem man dafür einen Kunststoff verwendet, der thermisch schrumpfbar ist und den übergezogenen Kunststofffolienüberzug unter Einwirkung von Wärme aufschrumpft, oder aber indem man thermoplastischen Kunststoff verwendet und den übergestülpten Kunststofffolienüberzug unter Einwirkung von Wärme aufdrückt oder aufwalzt. Es ist möglich, aber in der Regel überflüssig, das Kunststoffinnenteil zur besseren Haftung des Kunststofffolienüberzuges vor dem Aufziehen des Kunststofffolienüberzuges mit Klebstoff zu beschichten, damit der Kunststofffolienüberzug durch diese Klebung auf dem Innenteil hält.

**Patentansprüche**

1. Abdeckkopf für die Handhabe einer Warmwasserarmatur mit einem auf die Armatur steckbaren, aus Kunststoff bestehenden Innenteil (1; 31), dessen Umfang mit einer Effektfolie (4; 34) abgedeckt ist, welches Innenteil über ein, die Effektfolie vollständig überdeckendes, aus klarem, durchsichtigem Kunststoff bestehendes, einen Luftspalt (6; 36) mit dem Innenteil aussparendes Außenteil (5; 35) gestülpt ist, das entlang des unteren Randes der Effektfolie mit dem Innenteil eine wasserdichte Abdichtung (7; 37) des Luftspaltes bildet, dadurch gekennzeichnet, daß die Effektfolie ein außen mit einer hochglänzenden Metallschicht versehener Kunststoff-Folienüberzug (4; 34) ist, daß der Kunststoff-Folienüberzug über den Umfang des Innenteils (1; 31) an diesem überall dicht anliegend aufgezogen ist, so daß der Luftspalt (6; 36) sich ausschließlich zwischen dem Kunststoff-Folienüberzug und dem Außenteil (5; 35) erstreckt, und daß der Luftspalt entlang des oberen und des unteren Randes des Kunststoff-Folienüberzuges (4; 34) wasserdicht abgedichtet ist und durch Verschweißen oder Verkleben von Innenteil und Außenteil mit dem Kunststoff-Folienüberzug entlang der betreffenden Ränder dieser Teile.

2. Abdeckkopf nach Anspruch 1, dadurch gekennzeichnet, daß der Kunststoff-Folienüberzug aus thermisch schrumpfbarem Kunststoff besteht und thermisch auf das Innenteil aufgeschrumpft ist.

3. Abdeckkopf nach Anspruch 1, dadurch gekennzeichnet, daß der Kunststoff-Folienüberzug aus thermo-plastischem Kunststoffmaterial besteht und angewärmt auf das Innenteil aufgedrückt ist.

4. Abdeckkopf nach einem der vorhergehenden Ansprüche, dadurch gekennzeichnet, daß ein außen mit einer hochglänzenden Metallschicht versehener Kunststoffschlauchabschnitt (4) über die Abdeckzone des Innenteils an diesem überall dicht anliegend aufgezogen ist.

5. Abdeckkopf nach einem der vorhergehenden Ansprüche, dadurch gekennzeichnet, daß der Kunststoff-Folienüberzug aus einer flachen, metallbeschichteten Kunststoffplatte tiefgezogen ist.

6. Abdeckkopf nach Anspruch 1, dadurch gekennzeichnet, daß der Kunststoff-Folienüberzug (34) in einer Spritzform gespritzt ist, und zwar mit einer Form, die auf die Abdeckzone des Innenteils formschlüssig paßt.

7. Abdeckkopf nach einem der vorhergehenden Ansprüche, dadurch gekennzeichnet, daß die Metallschicht des Kunststoff-Folienüberzuges aufkaschiert ist.

8. Abdeckkopf nach einem der vorhergehenden Ansprüche 1 bis 6, dadurch gekennzeichnet, daß die Metallschicht des Kunststoff-Folienüberzuges aufgedampft ist.

## Claims

1. Cover member for the handle of a hot water fitting with a plastic inner part (1, 31), which can be mounted on the fitting, and whose periphery is covered with an effect foil (4, 34), said inner part being engaged over an outer part (5, 35) which completely covers the effect foil, which is made from clear, transparent plastic and forms an air gap (6, 36) with the inner part, the outer part forming a watertight seal (7, 37) of the air gap with the inner part along the lower edge of the effect foil, characterized in that the effect foil is a plastic foil covering (4, 34) externally provided with a highly polished metal coating, that the plastic foil covering is tightly drawn over the entire periphery of the inner part (1, 31), so that the air gap (6, 36) exclusively extends between the plastic foil covering and the outer part (5, 35) and that the air gap is sealed in watertight manner along the upper and lower edge of the plastic foil covering (4, 34) and by welding or bonding the inner part and outer part to the plastic foil covering along the relevant edges of said parts.

2. Cover member according to claim 1, characterized in that the plastic foil covering is made from thermally shrinkable plastic and is thermally shrunk on to the inner part.

3. Cover member according to claim 1, characterized in that the plastic foil covering is made from thermoplastic material and after preheating is pressed on to the inner part.

4. Cover member according to one of the preceding claims, characterized in that a plastic hose section (4) externally provided with a highly polished metal coating is drawn in tightly engaging manner over the entire covering zone of the inner part.

5. Cover member according to one of the preceding claims, characterized in that the plastic foil covering is deep drawn from a flat, metal-coated plastic plate.

6. Cover member according to claim 1, characterized in that the plastic foil covering (34) is injection moulded in an injection mould and specifically with a shape positively matching the covering zone of the inner part.

7. Cover member according to one of the preceding claims, characterized in that the metal coating of the plastic foil covering is laminated on.

8. Cover member according to one of the preceding claims 1 to 6, characterized in that the metal coating of the plastic foil covering ist evaporated on.

## Revendications

1. Tête de recouvrement, utilisée pour manier une pièce de robinetterie pour eau chaude sanitaire, à savoir une tête de recouvrement avec une partie intérieure (1; 31) en matière plastique synthétique, laquelle partie intérieure peut être fixée sur la pièce de robinetterie, la périphérie de cette partie intérieure étant recouverte d'une feuille métallisée décorative, (4, 34), laquelle partie intérieure est repliée sur la partie extérieure (5; 35), en matière plastique synthétique, claire et transparente, recouvrant complètement la feuille métallisée décorative, de manière à ménager entre les deux susdites parties une fente d'aération (6; 36), tandis que le long du bord inférieur de la feuille métallisée décorative, la fente d'aération (6; 36), comprise entre ladite partie extérieure et ladite partie intérieure est rendue étanche à l'eau par un moyen approprié (7; 37), à savoir, une tête de recouvrement, caractérisée par le fait:
— que la feuille métallisée décorative est une feuille de revourement en matière plastique synthétique (4; 34), extérieurement pourvue d'une couche de métal d'un brillant parfait,
— que sur la périphérie de ladite pièce intérieure (1; 31) la feuille de recouvrement en matière plastique synthétique est tirée vers le haut en étant partout accolée à cette pièce, cela de telle manière que la fente d'aération (6; 36) s'étende exclusivement entre la feuille de recouvrement en matière plastique synthétique et la partie extérieure (5; 35) de la pièce de robinetterie et
— que le long du bord supérieur et du bord inférieur de la feuille de recouvrement en matière plastique synthétique (4; 34), la fente d'aération soit rendue étanche, cela en soudant ou en collant à la feuille de recouvrement en matière plastique synthétique, la partie intérieure et la partie extérieure de la pièce de robinetterie, le long des bords intéressés de ces parties.

2. Tête de recouvrement, conforme à la revendication 2, caractérisée par le fait que la feuille de recouvrement en matière plastique synthétique est plus précisément en une matière plastique synthétique thermiquement rétrécissable et que cette feuille de recouvrement est posée à chaud sur la partie intérieure de la pièce de robinetterie, de manière à se rétrécir à froid.

3. Tête de recouvrement, conforme à la revendication 1, caractérisée par le fait que la feuille de recouvrement en matière plastique synthétique est plus précisément en une matière plastique synthétique thermoplastique et que cette feuille de recouvrement est pressée à chaud sur la partie intérieure de la pièce de robinetterie.

4. Tête de recouvrement, conforme à une des revendications précédentes, caractérisée par le fait qu'un tronçon de gaine en matière plastique synthétique (4) extérieurement pourvu d'une couche de métal d'un brillant parfait est tiré vers le haut sur toute la zone de recouvrement de la partie intérieure de la pièce de robinetterie, cela en étant partout accolé à celle-ci.

5. Tête de couvrement, conforme à une des revendications précédentes, caractérisée par le fait que la feuille de recouvrement en matière plastique synthétique est emboutie en partant d'une plaque plate en matière plastique synthétique, recouverte d'une chouche de métal.

6. Tête de recouvrement, conforme à la revendication 1, caractérisée par le fait que la matière plastique synthétique de la feuille de recouvrement (34) est injectée dans un moule d'injection, à savoir dans un moule dont la forme s'adapte parfaitement à celle de la zone de recouvrement de la partie intérieure de la pièce de robinetterie.

7. Tête de recouvrement, conforme à une des revendications précédentes, caractérisée par le fait que la couche de métal de recouvrement en matière plastique synthétique est appliquée par calandrage.

8. Tête de recouvrement, conforme à une des revendications précédentes 1 à 6, caractérisée par le fait que la couche de métal de la feuille de recouvrement en matière plastique synthétique est appliquée par un procédé de métallisation par évaporation sous vide.

Fig. 1

Fig. 2

32
31
34
35
36
37

Fig 3

35
31
36
34
32

Fig. 4

34

Fig. 5